# EUROPEAN PATENT SPECIFICATION

(11) **EP 3 853 092 B1**
(45) Date of publication and mention of the grant of the patent: **02.12.2026**
(21) Application number: 19876855.8
(22) Date of filing: 24.10.2019
(51) Int. Cl.: G06V 10/82, G06V 20/58, G06V 10/764, G08G 1/0962, G08G 1/0967, G06N 3/0464, G06N 3/045

(54) **RAILROAD LIGHT DETECTION**
ERKENNUNG VON EISENBAHNLICHT
DÉTECTION DE LUMIÈRE DE VOIE FERRÉE

(30) Priority: 26.10.2018 US 201816171730
(43) Date of publication of application: 28.07.2021
(73) Proprietor: Waymo LLC, Mountain View, CA 94043 (US)
(72) Inventor: HSIAO, Edward, Mountain View, CA 94043 (US)
(74) Representative: Chettle, John Edward
(86) International application number: PCT/US2019/057825
(87) International publication number: WO 2020/086822

(56) References cited:
- EP-A1- 2 851 249
- JP-A- 2008 115 823
- JP-A- 2011 169 301
- US-A1- 2006 119 489
- US-A1- 2013 229 520
- US-A1- 2015 081 187
- US-A1- 2018 307 925
- US-A1- 2018 309 963

## Description

### CROSS-REFERENCE TO RELATED APPLICATIONS

The present application claims the benefit of Application Serial No. 16/171,730, filed October 26, 2018.

### BACKGROUND

Autonomous vehicles, such as vehicles that do not require a human driver, can be used to aid in the transport of passengers or items from one location to another. Such vehicles may operate in a fully autonomous mode where passengers may provide some initial input, such as a pickup or destination location, and the vehicle maneuvers itself to that location. In order to do so safely, these vehicles must be able to detect and identify objects in the environment as well as respond to them quickly. Typically, these objects are identified from information that can be perceived by sensors such as LIDAR, radar, or cameras.

In some instances, detection and identification of the status of active signals and signs is paramount to safely maneuvering a vehicle to its destination. For instance, railroad crossing lights can provide important contextual cues to human drivers about what may be happening or is about to be happening at a railroad crossing in the vehicle's trajectory. Therefore being able to detect and respond to such active signals can be especially important to ensuring a safe and effective autonomous driving experience. United States Patent Application Publication No. US 2018/307925 A1 presents systems and methods for analyzing traffic signal lights in order to control an autonomous vehicle. European Patent Application Publication No. EP 2851249 A1 presents a motor vehicle safety arrangement and method for controlling automatic travel of a fully automated vehicle. Japanese Patent Application Publication No. JP 2011169301 A presents an engine automatic stop system.

### BRIEF SUMMARY

The invention is defined in the claims. This technology generally relates to controlling a vehicle based on a railroad light's activation status. One aspect of the technology is a method, the method comprising: receiving, by the one or more processors, images of a railroad light; determining, based on the images of the railroad light, by the one or more processors, the illumination status of a pair of lights of the railroad light over a period of time as the vehicle approaches the railroad light; determining, by the one or more processors and based on the illumination status of the pair of lights, a confidence level, wherein the confidence level indicates the likelihood the railroad light is active; and controlling the vehicle as it approaches the railroad light based on the confidence level.

In some instances, a trajectory of the autonomous vehicle is updated based on the confidence level and the vehicle is controlled as it approaches the railroad light based on the updated trajectory.

In some instances, prior to determining the illumination status of the pair of lights, determining the railroad light is positioned along a trajectory of the autonomous vehicle and configured to control traffic travelling in a direction of the vehicle across a railroad track.

In some embodiments, determining the illumination status of the pair of lights further comprises: determining the vehicle's distance from the railroad light; and upon the distance determination being within a predefined threshold distance, determining the illumination status of the pair of lights.

In some embodiments, determining the illumination status of the pair of lights includes: categorizing image data of the images of the railroad light by color and shape; determining the brightness level of portions of the image data categorized as red and circular; and determining the brightness level satisfies or fails to satisfy a threshold value indicating at least one light of the pair of lights is illuminated or not illuminated, respectively. In some instances, determining the brightness level includes using a sliding window based correlation filter. In some embodiments, determining whether the brightness level satisfies or fails to satisfy the threshold value includes using a convolutional neural network.

In some embodiments, determining the illumination status of a pair of lights includes determining an illumination pattern between each light of the pair of lights.

In some embodiments, an updated confidence level indicating a greater likelihood the railroad light is active is determined based on the illumination pattern of the pair of lights,

In some embodiments, when the confidence level is a first level, the updated trajectory includes stopping the vehicle before the railroad track. In some instances, when the confidence level is a second level, the updated trajectory is the same as an immediately preceding trajectory. In some instances, when the confidence level is between a first and a second level, the updated trajectory includes slowing down the vehicle.

Another aspect of the technology is directed to a system comprising one or more processors. The one or more processors are configured to receive images of a railroad light; determine, based on the images of the railroad light, the illumination status of a pair of lights of the railroad light over a period of time as the vehicle approaches the railroad light; determine, based on the illumination status of the pair of lights, a confidence level, wherein the confidence level indicates the likelihood the railroad light is active; and control the vehicle as it approaches the railroad light based on the confidence level.

In some embodiments, the one or more processors are further configured to: update, based on the confidence level, a trajectory of the autonomous vehicle; and control the vehicle as it approaches the railroad light based on the updated trajectory.

In some embodiments, prior to determining the illumination status of the pair of lights, determining the railroad light is positioned along a trajectory of the autonomous vehicle and configured to control traffic travelling in a direction of the vehicle across a railroad track. In some embodiments, determining the illumination status of the pair of lights further comprises: determining the vehicle's distance from the railroad light; and upon the distance determination being within a predefined threshold distance, determining the illumination status of the pair of lights.

In some embodiments, determining the illumination status of the pair of lights includes: categorizing image data of the images of the railroad light by color and shape; determining the brightness level of portions of the image data categorized as red and circular; and determining the brightness level satisfies or fails to satisfy a threshold value indicating at least one light of the pair of lights is illuminated or not illuminated, respectively. In some instances, determining the brightness level includes using a sliding window based correlation filter. In some instances, determining whether the brightness level satisfies or fails to satisfy the threshold value includes using a convolutional neural network.

In some embodiments, determining the illumination status of a pair of lights includes determining an illumination pattern between each light of the pair of lights, and wherein the one or more processors are further configured to: determine, based on the illumination status of the pair of lights, an updated confidence level, wherein the updated confidence level indicates the likelihood the railroad light is active.

### BRIEF DESCRIPTION OF THE DRAWINGS

FIGURES 1A and 1B show example railroad lights in accordance with aspects of the disclosure.
FIGURE 2 is a functional diagram of an example vehicle in accordance with aspects of the disclosure.
FIGURE 3 is an example representative view of a vehicle in accordance with aspects of the disclosure.
FIGURE 4 is an example view of a section of roadway corresponding to map information in accordance with aspects of the disclosure.
FIGURES 5A and 5B show an example illumination of railroad lights in accordance with aspects of the disclosure
FIGURE 6 is an example view of a section of roadway corresponding to map information and an updated vehicle trajectory in accordance with aspects of the disclosure.
FIGURE 7 is a flow diagram in accordance with aspects of the disclosure.

### DETAILED DESCRIPTION

### OVERVIEW

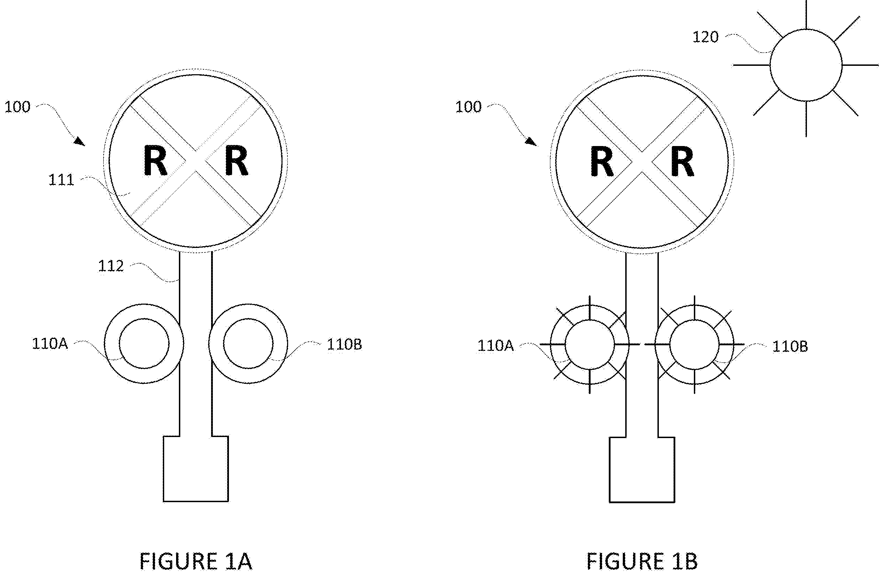

This technology relates to detecting and responding to active railroad lights in the vicinity of a vehicle. As one example, a railroad light 100 controlling a railroad crossing may consist of a sign 111 and a pair of red, circular lights 110A and 110B, attached to a support 112 as shown in Fig. 1A. When the railroad light 100 is activated, the pair of lights 110A, 110B is configured to flash in an alternating pattern to provide a warning to a vehicle, driver, pedestrian, etc., that the railroad crossing and/or railroad tracks are active, including when a train is approaching the railroad tracks.

Determining whether the railroad light 100 is active or inactive may include using one or more sensors, such as a camera, to capture images of the pair of lights by sensors on a vehicle and determining whether one or the other light of the pair of lights are illuminated. However, assuring images of the pair of lights provide an accurate representation of the state of the railroad light may be difficult. For instance, there is a possibility that the sensors may not capture an image of an illuminated light in the pair of lights 100A, 100B, since the lights are typically not illuminated, even when the railroad light is active. In other words, the sensors may capture images of the pair of lights when they are not illuminated, even when the railroad light is activated. Moreover, the slightly larger size of the lights in the pair of lights 100A, 100B, in comparison to typical traffic signal lights (e.g., a "red" light at an intersection), may result in light reflecting off of the pair of lights surfaces. As such, there is a possibility images of the pair of lights 110A and 110B, such as when taken during a time when the sun 120 is low and in front of the lights, may make an inactive railroad light, such as railroad light 100, appear active, as shown in Fig. 1B. Images which do not accurately represent the current status of the railroad light may result in an autonomous, including semi-autonomous vehicles, making incorrect determinations which may lead to unsafe decisions, such as traveling across active railroad tracks (e.g., when a train is approaching or on the railroad tracks,) or braking hard to avoid crossing inactive railroad tracks (when a train is not necessarily approaching or on the railroad track).

To address these issues, the actions of the autonomous vehicle may be adjusted based on confidence levels assigned to determinations of the illumination status of the pair of lights over a period of time as the autonomous vehicle approaches the railroad crossing. One or more computing devices in the vehicle may be in communication with various systems of vehicle, such as perception and positioning system. Data received from these systems, including image data captured by the sensors of the perception system, may be analyzed to determine the state information of a railroad light which is positioned along or near the autonomous vehicle's trajectory may be determined.

The determination of the state information of the railroad light may be based on the illumination status of each light of the pair of lights as the vehicle approaches the railroad light. In this regard, the computing device may determine the brightness and/or color intensity of the image data representing the lights. Based on the brightness and/or color intensity, the computing device may classify the light represented by the image data as being illuminated or not.

Based on the illumination classifications, a confidence value indicating the likelihood the railroad light is active or inactive may be determined. In this regard, the confidence level may be increased for some or all detections of an illuminated light or a particular illumination pattern between the lights of the pair of lights. The behavior of the vehicle may be adjusted based on the determined confidence value. In this regard, depending upon the level of the confidence level, such as a low or high level, the vehicle may perform some action, such as slowing down, stopping, speeding up, etc.

The features described herein allow for improved and safer travel of an autonomous vehicle as it approaches and traverses through a railroad crossing. In this regard, the features described herein provide for more reliable detection of active railroad lights. Moreover, by pairing the lights together, the chance of detecting a false positive is reduced and allows the vehicle to slow down earlier should only a single light be determined to be active. As such, evasive maneuvers, such as hard braking to stop before an active railroad light may be avoided.

### EXAMPLE SYSTEMS

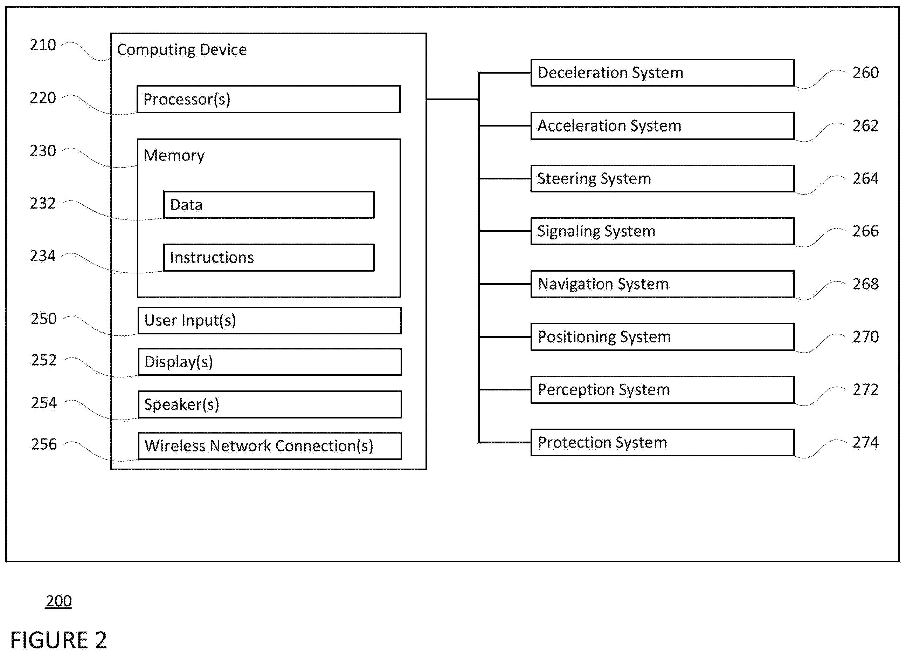

As shown in Fig. 2, a vehicle 200 in accordance with one aspect of the disclosure includes various components. While certain aspects of the disclosure are particularly useful in connection with specific types of vehicles, the vehicle may be any type of vehicle including, but not limited to, cars, trucks, motorcycles, busses, recreational vehicles, etc. The vehicle may have one or more computing devices, such as computing devices 210 containing one or more processors 220, memory 230 and other components typically present in general purpose computing devices.

The memory 230 stores information accessible by the one or more processors 220, including instructions 234 and data 232 that may be executed or otherwise used by the processor 220. The memory 230 may be of any type capable of storing information accessible by the processor, including a computing device-readable medium, or other medium that stores data that may be read with the aid of an electronic device, such as a hard-drive, memory card, ROM, RAM, DVD or other optical disks, as well as other write-capable and read-only memories. Systems and methods may include different combinations of the foregoing, whereby different portions of the instructions and data are stored on different types of media.

The instructions 234 may be any set of instructions to be executed directly (such as machine code) or indirectly (such as scripts) by the processor. For example, the instructions may be stored as computing device code on the computing device-readable medium. In that regard, the terms "instructions" and "programs" may be used interchangeably herein. The instructions may be stored in object code format for direct processing by the processor, or in any other computing device language including scripts or collections of independent source code modules that are interpreted on demand or compiled in advance. Functions, methods and routines of the instructions are explained in more detail below.

The data 232 may be retrieved, stored or modified by processor 220 in accordance with the instructions 234. For instance, although the claimed subject matter is not limited by any particular data structure, the data may be stored in computing device registers, in a relational database as a table having a plurality of different fields and records, XML documents or flat files. The data may also be formatted in any computing device-readable format.

The processor 220 may be any one or more conventional processors, such as commercially available CPUs. Alternatively, the one or more processors may be a dedicated device such as an ASIC or other hardware-based processor. Although FIGURE 2 functionally illustrates the processor, memory, and other elements of computing devices 210 as being within the same block, it will be understood by those of ordinary skill in the art that the processor, computing device, or memory may actually include multiple processors, computing devices, or memories that may or may not be stored within the same physical housing. For example, memory 230 may be a hard drive and/or other storage media located in housing different from that of computing device 210. Accordingly, references to a processor or computing device will be understood to include references to a collection of processors or computing devices or memories that may or may not operate in parallel.

Computing device 210 may include all of the components normally used in connection with a computing device such as the processor and memory described above as well as one or more user inputs 250 (e.g., a mouse, keyboard, touch screen and/or microphone) and various electronic displays (e.g., a monitor having a screen or any other electrical device that is operable to display information). In this example, the vehicle includes one or more internal displays 252 as well as one or more speakers 254 to provide information or audio visual experiences. In this regard, display 252 may be located within a cabin of vehicle 200 and may be used by computing device 210 to provide information to passengers or maintenance personnel within or otherwise in the vicinity of, the vehicle 200.

Computing device 210 may also include one or more wireless network connections 256 to facilitate communication with other computing devices, such as the client computing devices and server computing devices described in detail below. The wireless network connections may include short range communication protocols such as Bluetooth, Bluetooth low energy (LE), cellular connections, as well as various configurations and protocols including the Internet, World Wide Web, intranets, virtual private networks, wide area networks, local networks, private networks using communication protocols proprietary to one or more companies, Ethernet, Wi-Fi and HTTP, and various combinations of the foregoing. Computing device 210 of vehicle 200 may also receive or transfer information to and from other computing devices (not shown), such as computing devices which contain or otherwise store further map or perception data.

In one example, computing device 210 may control the computing devices of an autonomous driving computing system incorporated into vehicle 200. The autonomous driving computing system may capable of communicating with various components of the vehicle in order to control the movement of vehicle 200 according to primary vehicle control code stored in memory 230. For example, computing device 210 may be in communication with various systems of vehicle 200, such as deceleration system 260, acceleration system 262, steering system 264, signaling system 266, navigation system 268, positioning system 270, perception system 272, and power system 274 (i.e. the vehicle's engine or motor) in order to control the movement, speed, etc. of vehicle 200 in accordance with the instructions 234 of memory 230. Again, although these systems are shown as external to computing device 210, in actuality, these systems may also be incorporated into computing device 210, again as an autonomous driving computing system for controlling vehicle 200.

As an example, computing device 210 may interact with one or more actuators or other such components of the deceleration system 260 and/or acceleration system 262, such as brakes, accelerator pedal, and/or the engine or motor of the vehicle, in order to control the speed of the vehicle. Similarly, one or more actuators or other such components of the steering system 264, such as a steering wheel, steering shaft, and/or pinion and rack in a rack and pinion system, may be used by computing device 210 in order to control the direction of vehicle 200. For example, if vehicle 200 is configured for use on a road, such as a car or truck, the steering system may include one or more actuators or other such devices to control the angle of wheels to turn the vehicle. Signaling system 266 may be used by computing device 210 in order to signal the vehicle's intent to other drivers or vehicles, for example, by lighting turn signals or brake lights when needed.

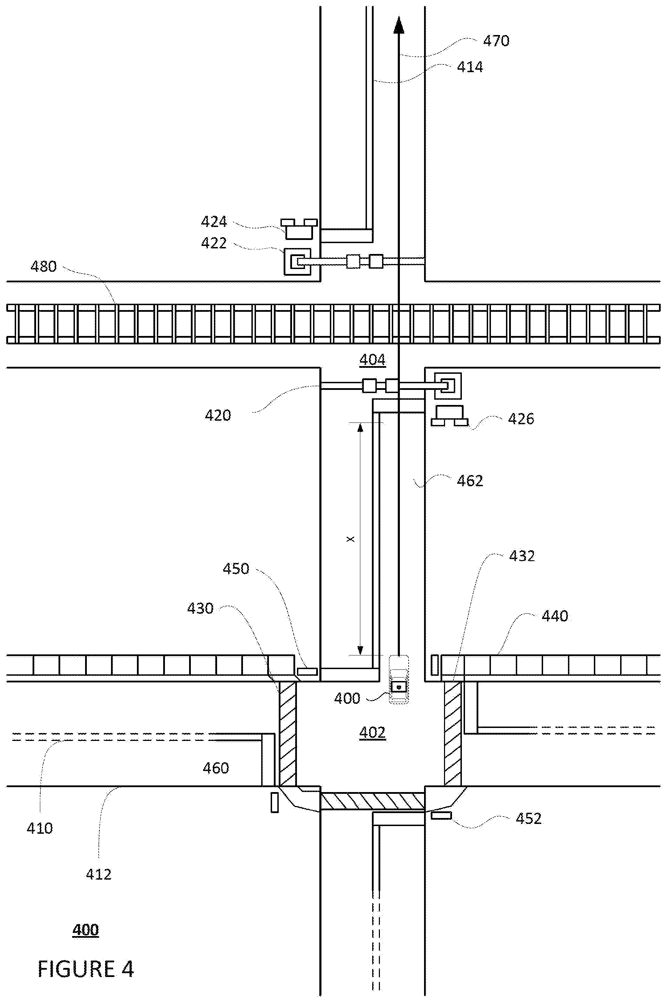

Navigation system 268 may be used by computing device 210 in order to determine and follow a route to a location. In this regard, the navigation system 268 and/or data 232 may store detailed map/roadmap information, e.g., highly detailed maps identifying the shape and elevation of roadways, lane lines, intersections, crosswalks, speed limits, traffic signals, buildings, signs, real time traffic information, vegetation, or other such objects and information. For instance, Fig. 4 shows example map information identifying the shape, location, and other characteristics of various road features proximate to intersection 402 and railroad crossing 404. In this example, the map information 400 includes information defining the shape and location of lane markers 410-414, railroad crossing gates 420, 422, railroad lights 424, 426 (which may be the same as or similar to railroad light 100), railroad tracks 480, crosswalks 430, 432, sidewalk 440, stop signs 450, 452, as well as the shape and direction of traffic for lanes 460, 462, etc. Although the example of map information 400 includes only a few road features, for instance, lane lines, shoulder areas, an intersection, and lanes and orientations, map information 400 may also identify various other road features such as traffic signal lights, crosswalks, sidewalks, stop signs, yield signs, speed limit signs, road signs, speed bumps, etc. Although not shown, the map information may also include information identifying speed limits and other legal traffic requirements, such as which vehicle has the right of way given the location of stop signs or state of traffic signals, etc.

Although the detailed map information is depicted herein as an image-based map, the map information need not be entirely image based (for example, raster). For example, the detailed map information may include one or more roadgraphs or graph networks of information such as roads, lanes, intersections, and the connections between these features. Each feature may be stored as graph data and may be associated with information such as a geographic location and whether or not it is linked to other related features, for example, a stop sign may be linked to a road and an intersection, etc. In some examples, the associated data may include grid-based indices of a roadgraph to allow for efficient lookup of certain roadgraph features.

Positioning system 270 may be used by computing device 210 in order to determine the vehicle's relative or absolute position on a map or on the earth. For example, the positioning system 270 may include a GPS receiver to determine the positioning system's latitude, longitude and/or altitude position. Other location systems such as laser-based localization systems, inertial-aided GPS, or camera-based localization may also be used to identify the location of the vehicle. The location of the vehicle may include an absolute geographical location, such as latitude, longitude, and altitude as well as relative location information, such as location relative to other cars immediately around it which can often be determined with less noise that absolute geographical location.

The positioning system 270 may also include other devices in communication with computing device 210, such as an accelerometer, gyroscope or another direction/speed detection device to determine the direction and speed of the vehicle or changes thereto. By way of example only, an acceleration device may determine its pitch, yaw or roll (or changes thereto) relative to the direction of gravity or a plane perpendicular thereto. The device may also track increases or decreases in speed and the direction of such changes. The device's provision of location and orientation data as set forth herein may be provided automatically to the computing device 210, other computing devices and combinations of the foregoing.

The perception system 272 may also include one or more components for detecting objects external to the vehicle such as other vehicles, obstacles in the roadway, traffic signals, signs, trees, etc. For example, the perception system 272 may include lasers, sonar, radar, cameras and/or any other detection devices that record data which may be processed by computing device 210. For example, the perception system 272 may include lasers, sonar, radar, cameras and/or any other detection devices that record data which may be processed by the computing device. In some instances, the perception system may include a laser or other sensors mounted on the roof or other convenient location of a vehicle. For instance, the perception system 272 may use various sensors, such as LIDAR, sonar, radar, cameras, etc. to detect objects and their characteristics such as location, orientation, size, shape, type, direction and speed of movement, etc. In the case where the vehicle is a passenger vehicle such as a minivan, the minivan may include a laser or other sensors mounted on the roof or other convenient location.

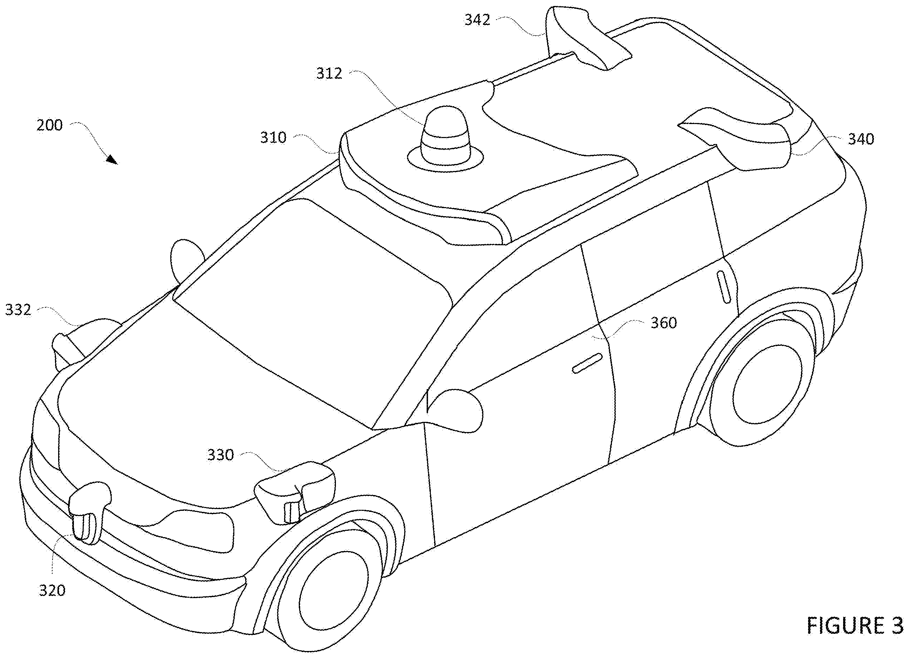

For instance, FIGURE 3 is an example external view of vehicle 200. In this example, a roof-top sensor housing 310 and a dome sensor housing 312 may include one or more lidar sensors, cameras, and/or radar units. In addition, housing 320 located at the front end of vehicle 100 and housings 330, 332 on the driver's and passenger's sides of the vehicle may each store a lidar sensor. For example, housing 330 is located in front of driver door 360. Vehicle 200 also includes housings 340, 342 for radar units and/or cameras also located on the roof of vehicle 200. Additional radar units and cameras (not shown) may be located at the front and rear ends of vehicle 200 and/or on other positions along the roof or roof-top sensor housing 310. In this regard, each of housings 310, 312, 320, 330, 332, 340, and 342 may be considered sensor housings any or all of the aforementioned sensors may be considered a part of the vehicle's perception system 272.

The computing device may use the positioning system to determine the vehicle's location and perception system to detect and respond to objects, such as a railroad light (including a pair of lights) and/or railroad crossing, when needed to reach the location safely. In order to do so, computing devices may cause the vehicle to accelerate (e.g., by increasing fuel or other energy provided to the engine by acceleration system), decelerate (e.g., by decreasing the fuel supplied to the engine, changing gears, and/or by applying brakes by deceleration system), change direction (e.g., by turning the front or rear wheels of vehicle by steering system), and signal such changes (e.g., by lighting turn signals of signaling system). Thus, the acceleration system and deceleration system may be a part of a drivetrain that includes various components between an engine of the vehicle and the wheels of the vehicle. Again, by controlling these systems, computing devices may also control the drivetrain of the vehicle in order to maneuver the vehicle autonomously.

Based on data received from the various system components, the computing devices may control the direction, speed, acceleration, etc. of the vehicle by sending instructions to the various components of the vehicle. For instance, the computing devices may navigate the vehicle to a destination location completely autonomously using data from the map information and navigation system.

The memory 130 may store various software modules and models. These models include learned models, for instance, those that utilize machine learning, such as classifiers. As discussed herein, the classifier, once trained, may be used to identify active and inactive railroad lights as well as a confidence or likelihood value for the railroad light status.

### EXAMPLE METHODS

In addition to the operations described above and illustrated in the figures, various operations will now be described. It should be understood that the following operations do not have to be performed in the precise order described below. Rather, various steps can be handled in a different order or simultaneously, and steps may also be added or omitted.

To detect a railroad light's state (e.g., active or inactive) the computing device 210 may analyze images of the railroad light as the vehicle approaches a railroad crossing. As noted herein, map data may include details of the locations of railroad lights and railroad crossings and the positioning system may include details as to the location of the vehicle relative to the railroad lights. The analysis of images may begin once the autonomous vehicle is a certain distance, such as 150 meters, or more or less, from a railroad light positioned along or near the autonomous vehicle's trajectory and configured to control traffic in the to the vehicle's direction. The distance determination may be made by the computing device 210 based on the map data and positioning system 270 the location of the vehicle relative to the railroad light 100.

For instance, and again referring to Fig. 4, an example of vehicle 200 is shown maneuvering on a portion of roadways (460, 462) corresponding to an area of map information 400. In this regard, vehicle 200 is crossing intersection 402 and entering lane 462, by following trajectory 470. The trajectory 470 will, if followed, take vehicle 200 across railroad crossing 404, which is controlled by railroad light 426. Accordingly, once the vehicle's computing device 210 detects the distance between the vehicle and the railroad light 426, labeled as X in Fig. 4, is at or within a certain threshold distance, the computing devices 210 and/or the perception system 272 may analyze the images for state information of the railroad light 426. In some instances, multiple sensors of the perception system 272 may capture images of the railroad light at the same time. In such instances, the image data corresponding to the image having the clearest, most direct line of sight of the lights of the railroad light may be selected for analysis.

The analysis may include monitoring the illumination status of each light of the pair of lights of the railroad light via images from the perception system 172 over a period of time as the vehicle approaches the railroad light. For instance, the computing device 210 may continuously, or periodically, classify the color and shape the image data representing the areas around and including the lights of the pair of lights 100A, 100B. As railroad lights generally use round red lights, the computing device may determine the brightness and/or color intensity of portions of the image data which are categorized as red and round. For instance, a sliding window based correlation filter may be used to determine the intensity of the image data categorized as red and round over periods of time.

A convolutional neural network may be used to classify whether a light is illuminated or not based on the intensity determination output by the sliding window based correlation filter. In this regard, image data which satisfies brightness and/or color intensity thresholds as determined by the convolutional neural network may indicate the light represented by the image data is illuminated. The intensity thresholds may be chosen empirically based on conditions at the location of a particular railroad light, such as ambient light, sun location relative to the light, etc. As such, the threshold levels may be adjusted based on the time of day, season, etc., where the railroad light is positioned, and/or the historical brightness of the railroad light.

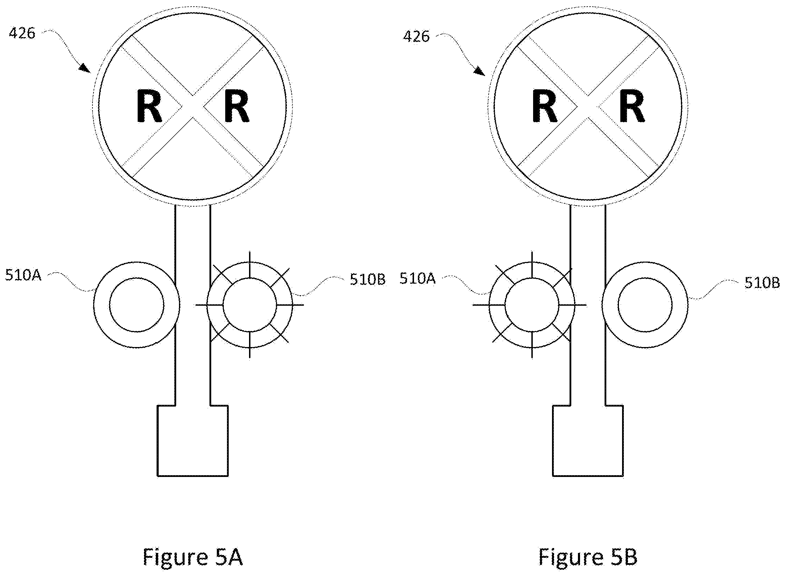

In some instances, the pair of lights 100A, 100B of the railroad light 100 may be paired together to determine whether the illumination pattern of the pair of lights matches a typical railroad light. In this regard, the lights of a pair of lights of a railroad light may typically flash alternately at a rate of 45 to 65 times per minute, or more or less. As such, the computing device 210 may monitor the illumination pattern of the pair of lights to determine whether the lights are illuminating in an alternating pattern consistent with that of a typical railroad light. For instance, and as shown in Fig. 5A, a first light 510B of the pair of lights on railroad light 426, which may be compared to railroad light 100, may be determined to be illuminated. Immediately, or shortly, such as one second, or more or less, after the first light 510B is determined to no longer be illuminating, second light 510A may be determined to be illuminated, as shown in Fig. 5B. In such an instance, the illumination pattern of the pair of lights of railroad light 426 may be determined to be consistent with that of a typical railroad light.

Each detection, or lack thereof, of a single light of a pair of lights illuminating or both lights of the pair of lights illuminating may be used to adjust a confidence level. The confidence level may indicate a confidence in the computing device 210's determination of the likelihood the railroad light is active or inactive. In this regard, the confidence level may be increased for each detection of an illuminated light or for each detection of a particular illumination pattern, such as the illumination pattern of a typical railroad light, as described herein. For instance, in the event the computing devices 210 determines the pair of lights 510A, 510B are illuminating in a pattern consistent with that of a typical railroad light, as illustrated in Figs. 5A and 5B, the confidence level may be increased, as it is more likely that the railroad light 426 is active. In another example, if the computing devices 210 determine a single light or both lights of the pair of lights 510A, 510B have illuminated multiple times, the confidence level may be increased by a small amount each time.

The computing device 210 may determine railroad light is active upon the confidence level satisfying a threshold value. In this regard, upon a certain number of detections of a light or both lights of the pair of lights being illuminated, the confidence level may be increased to a level such that the confidence level satisfies a threshold level, thereby indicating that the railroad light is active. In instances where no illumination is detected or illumination has not been detected for a certain time period, such as 2 seconds, or more or less, the confidence level may be decreased, as it is more likely that the railroad light is inactive. If the confidence level is below (or was above and drops below the threshold level, the computing devices may consider the railroad light to be inactive. In addition, where the two lights of the pair of lights are determined to be illuminated at the same time, which is not within the function of a typical railroad light, such as may occur when the sun is low and in front of the lights, the confidence level may also be decreased.

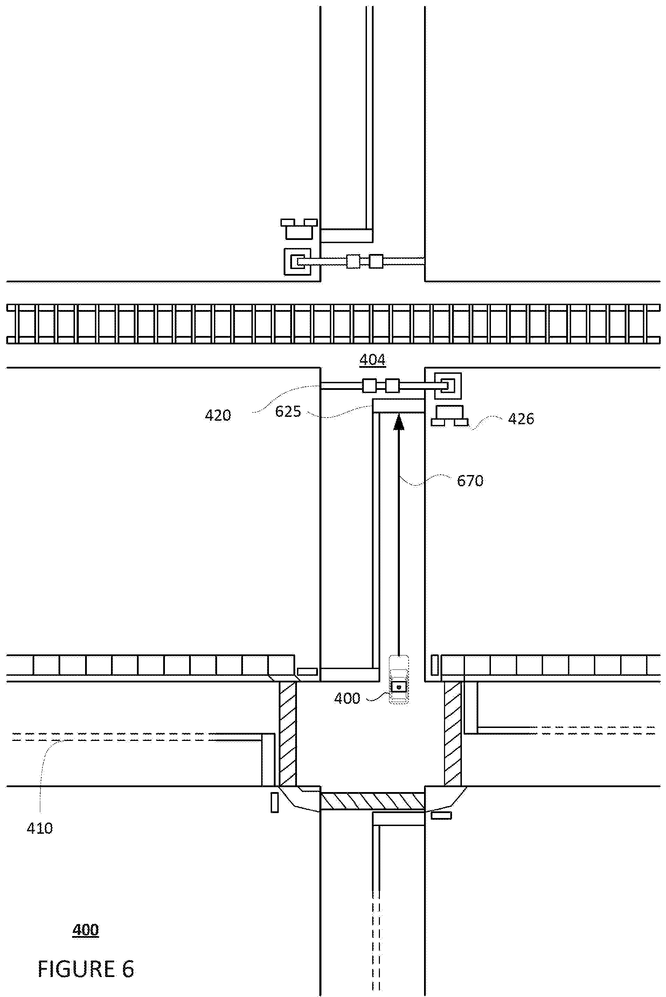

The computing device 210 and/or navigation system 268 of the vehicle may adjust the behavior of the vehicle based on the confidence level. In this regard, the computing device may pass to the vehicle's navigation system 268 the confidence level or data indicating the computing device 210 has determined confidence level indicates an active or inactive railroad light. Depending upon the level of the confidence level or whether the computing device 210 has determined the railroad light is active or inactive, the navigation system 268 may instruct the vehicle to perform some action. For instance, when the navigation system 268 receives a confidence level below the threshold value, indicating the railroad light is inactive, the navigation system may instruct the vehicle 400 to maintain its current trajectory, such as trajectory 470, including its speed and acceleration. In another example, when the navigation system 268 receives a confidence level within a certain predefined value of the threshold value, but not satisfying the threshold value, the navigation system may cause the vehicle to slow down to allow more time for the computing device to receive more data such that the confidence level may be adjusted such that it indicates an active or inactive railroad light. In yet another example, when the confidence level is high that a railroad light, such as railroad light 426 is active, the navigation system 268 may generate an updated trajectory 670, which instructs the vehicle 400 to slow down and stop at the stop line 625 at railroad crossing 404, as shown in Fig. 6. Although the confidence levels are discussed in terms of high and low, any scale may be use to indicate the confidence of the computing device in its determination as to whether the railroad light is active or inactive, such as a 1-10, 1-100, etc.

Machine learning models may be used to refine ore recalculate the confidence level determinations. In this regard, inputs such as the light illumination determinations discussed herein, as well as detections of train noises, downed railroad gates, bicycles, pedestrians, and/or vehicle's stopped in front of railroad gates, such as railroad gates, images captured in the vicinity of the railroad tracks showing a train traveling on the tracks, train schedules, etc., may be fed into the model. Based on the inputs, the model may output an adjusted confidence level. The adjusted confidence level may be recalculated each time new inputs are fed into the machine learning model. In some instances, previous confidence levels may be input into the machine learning model to provide a starting point for determining the adjusted or new confidence level determination. For instance, when the inputs of the model include a detection of an illuminated railroad light, such as railroad light 426 and downed railroad gates, such as railroad gates 420, the confidence level may be high. As such that the navigation system 268 may instruct the vehicle to slow down (i.e., decrease velocity and/or acceleration) and stop at the stop line 625, as shown in Fig. 6.

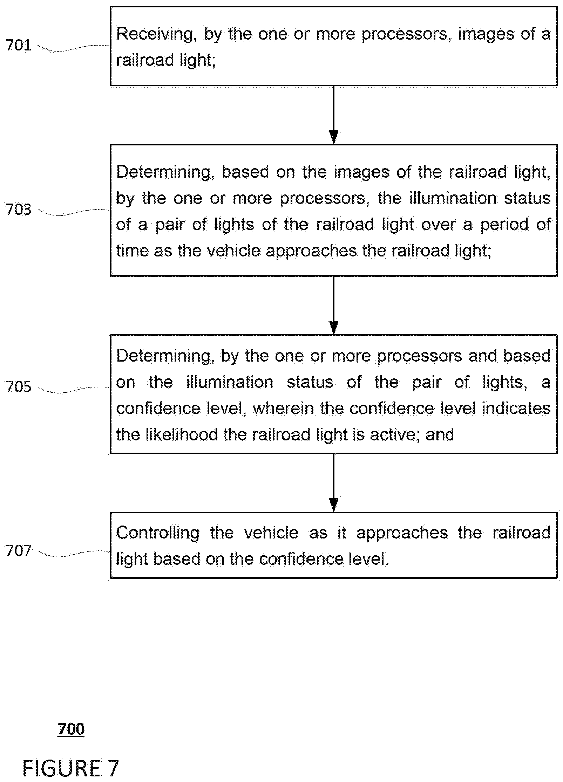

FIGURE 7 is a flow diagram 700 that may be performed by one or more processors such as one or more processors 220 of computing devices 210 in order to control a vehicle, such as vehicle 200 based on a railroad light's activation status. At block 701, images of a railroad light are received by one or more process. At block 703, the illumination status of a pair of lights of the railroad light over a period of time as the vehicle approaches the railroad light is determined by the one or more processors based on the images of the railroad light. At block 705, a confidence level is determined by the one or more processors based on the illumination status of the pair of lights, wherein the confidence level indicates the likelihood the railroad light is active. And at block 707, the vehicle is controlled as it approaches the railroad light based on the confidence level.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the embodiments should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible embodiments. Further, the same reference numbers in different drawings can identify the same or similar elements.

## Claims

1. A method for controlling an autonomous vehicle, the method comprising:
receiving, by one or more processors, images of a railroad light (100, 426) over a period of time as the vehicle approaches the railroad light, wherein the railroad light comprises a pair of lights (110A, 110B, 510A, 510B);
continuously or periodically classifying, by the one or more processors, from the received images of the railroad light, a colour of image data representing areas around and including the pair of lights;
determining, based on the images of the railroad light, by the one or more processors, a colour intensity of portions of the image data representing the pair of lights, wherein the portions of the image data are classified as red;,
classifying, based on the determined colour intensity of the portions of image data, by the one or more processors, the lights of the pair of lights as illuminated or not over the period of time;
monitoring, by the one or more processors, an illumination pattern between each light of the pair of lights over the period of time;
adjusting, by the one or more processors and based on the determined illumination pattern between each light of the pair of lights, a confidence level indicative of a likelihood the railroad light is active, wherein the confidence level is increased for each detection of a particular illumination pattern between each light of the pair of lights; and
controlling the autonomous vehicle as it approaches the railroad light based on the confidence level.

2. The method of claim 1, further comprising:
updating, based on the confidence level, by one or more processors, a trajectory of the autonomous vehicle; and
controlling the vehicle as it approaches the railroad light based on the updated trajectory.

3. The method of claim 1, comprising, prior to classifying the colour of the image data representing areas around and including the pair of lights, determining the railroad light is configured to control traffic travelling along a trajectory of the autonomous vehicle across a railroad track.

4. The method of claim 1, further comprising:
determining a distance of the vehicle from the railroad light; and
determining the distance is less than a predefined threshold distance; and
in response to determining the distance is less than a predefined threshold distance, classifying the colour of the image data representing areas around and including the pair of lights.

5. The method of claim 1, wherein classifying, based on the determined colour intensity of the portions of image data, the lights of the pair of lights as illuminated or not over the period of time includes:
determining the colour intensity of the portions of image data satisfies or fails to satisfy a threshold value indicating at least one light of the pair of lights is illuminated or not illuminated, respectively.

6. The method of claim 5, wherein determining the colour intensity of the portions of image data includes using a sliding window based correlation filter.

7. The method of claim 1,
wherein the illumination pattern between each light of the pair of lights indicates a rate at which the pair of lights flash in an alternating pattern between the lights.

8. The method of claim 2, wherein when the confidence level is a first level, the updated trajectory includes stopping the vehicle before a railroad track; or wherein when the confidence level is a second level, the updated trajectory is the same as an immediately preceding trajectory; or wherein when the confidence level is between a first and a second level, the updated trajectory includes slowing down the vehicle.

9. A system for controlling an autonomous vehicle, the system comprising:
one or more processors, wherein the one or more processors are configured to:
receive images of a railroad light (100, 426) over a period of time as the vehicle approaches the railroad light, wherein the railroad light comprises a pair of lights (110A, 110B, 510A, 510B);
continuously or periodically classify, from the received images of the railroad light, a colour of image data representing areas around and including the pair of lights;
determine, based on the images of the railroad light, a colour intensity of portions of the image data representing the pair of lights, wherein the portions of the image data are classified as red;
classify, based on the determined colour intensity of the portions of image data, the lights of the pair of lights as illuminated or not over the period of time;
monitor an illumination pattern between each light of the pair of lights over the period of time;
adjust, based on the determined illumination pattern between each light of the pair of lights, a confidence level indicative of a likelihood the railroad light is active, wherein the confidence level is increased for each detection of a particular illumination pattern between each light of the pair of lights; and
control the autonomous vehicle as it approaches the railroad light based on the confidence level.

10. The system of claim 9, wherein the one or more processors are further configured to:
update, based on the confidence level, a trajectory of the autonomous vehicle; and
control the vehicle as it approaches the railroad light based on the updated trajectory.

11. The system of claim 9, wherein prior to classifying the colour of the image data representing areas around and including the pair of lights, the one or more processors are configured to determine the railroad light is configured to control traffic travelling along a trajectory of the autonomous vehicle across a railroad track.

12. The system of claim 9, wherein the one or more processors are further configured to:
determine a distance of the vehicle from the railroad light; and
determine the distance is less than a predefined threshold distance; and
in response to determining the distance is less than a predefined threshold distance, classify the colour of the image data representing areas around and including the pair of lights.

13. The system of claim 9, wherein the one or more processors are configured to classify, based on the determined colour intensity of the portions of image data, the lights of the pair of lights as illuminated or not over the period of time by:
determining the colour intensity of the portions of image data satisfies or fails to satisfy a threshold value indicating at least one light of the pair of lights is illuminated or not illuminated, respectively.

14. The system of claim 13, wherein the one or more processors are configured to classify whether the lights of the pair of lights are illuminated or not using a convolutional neural network.

15. The system of claim 9, wherein the illumination pattern between each light of the pair of lights indicates a rate at which the pair of lights flash in an alternating pattern between the lights.

## Patentansprüche

1. Verfahren zum Steuern eines autonomen Fahrzeugs, das Verfahren umfassend:
Empfangen, durch einen oder mehrere Prozessoren, von Bildern einer Eisenbahnleuchte (100, 426) über einen Zeitraum, während sich das Fahrzeug der Eisenbahnleuchte nähert, wobei die Eisenbahnleuchte ein Paar Leuchten (110A, 110B, 510A, 510B) umfasst;
kontinuierliches oder periodisches Klassifizieren, durch den einen oder die mehreren Prozessoren anhand der empfangenen Bilder der Eisenbahnleuchte, einer Farbe von Bilddaten, die Bereiche um und einschließlich des Paars Leuchten darstellen;
Bestimmen, basierend auf den Bildern der Eisenbahnleuchte durch den einen oder die mehreren Prozessoren, einer Farbintensität von Abschnitten der Bilddaten, die das Paar Leuchten darstellen, wobei die Abschnitte der Bilddaten als rot klassifiziert sind;
Klassifizieren, basierend auf der bestimmten Farbintensität der Abschnitte von Bilddaten durch den einen oder die mehreren Prozessoren, der Leuchten des Paars Leuchten als beleuchtet oder nicht über den Zeitraum;
Überwachen, durch den einen oder die mehreren Prozessoren, eines Beleuchtungsmusters zwischen jeder Leuchte des Paars Leuchten über den Zeitraum;
Anpassen, durch den einen oder die mehreren Prozessoren, und basierend auf dem bestimmten Beleuchtungsmuster zwischen jeder Leuchte des Paars Leuchten, eines Konfidenzgrads, der indikativ für eine Wahrscheinlichkeit ist, dass die Eisenbahnleuchte aktiv ist, wobei der Konfidenzgrad für jede Erfassung eines bestimmten Beleuchtungsmusters zwischen jeder Leuchte des Paars Leuchten erhöht wird; und
Steuern des autonomen Fahrzeugs, während es sich der Eisenbahnleuchte nähert, basierend auf dem Konfidenzgrad.

2. Verfahren nach Anspruch 1, ferner umfassend:
Aktualisieren, basierend auf dem Konfidenzgrad durch einen oder mehrere Prozessoren, einer Trajektorie des autonomen Fahrzeugs; und
Steuern des Fahrzeugs, während es sich der Eisenbahnleuchte nähert, basierend auf der aktualisierten Trajektorie.

3. Verfahren nach Anspruch 1, umfassend vor einem Klassifizieren der Farbe der Bilddaten, die Bereiche um und einschließlich des Paars Leuchten darstellen, ein Bestimmen, dass die Eisenbahnleuchte konfiguriert ist, um einen Verkehr entlang einer Trajektorie des autonomen Fahrzeugs über ein Bahngleis zu steuern.

4. Verfahren nach Anspruch 1, ferner umfassend:
Bestimmen eines Abstands des Fahrzeugs von der Eisenbahnleuchte; und Bestimmen, dass der Abstand geringer ist als ein vordefinierter Abstandsschwellenwert; und als Reaktion auf ein Bestimmen, dass der Abstand geringer ist als ein vordefinierter Abstandsschwellenwert, Klassifizieren der Farbe der Bilddaten, die Bereiche um und einschließlich des Paars Leuchten darstellen.

5. Verfahren nach Anspruch 1, wobei ein Klassifizieren, basierend auf der bestimmten Farbintensität der Abschnitte von Bilddaten, der Leuchten des Paars Leuchten als beleuchtet oder nicht über den Zeitraum Folgendes beinhaltet:
Bestimmen, ob die Farbintensität der Abschnitte von Bilddaten einen Schwellenwert erfüllt, der angibt, dass mindestens eine Leuchte des Paars Leuchten beleuchtet oder nicht beleuchtet ist.

6. Verfahren nach Anspruch 5, wobei ein Bestimmen der Farbintensität der Abschnitte von Bilddaten ein Verwenden eines Korrelationsfilters, der auf einem gleitenden Fenster basiert.

7. Verfahren nach Anspruch 1,
wobei das Beleuchtungsmuster zwischen jeder Leuchte des Paars Leuchten eine Rate angibt, mit der das Paar Leuchten in einem alternierenden Muster zwischen den Leuchten blinkt.

8. Verfahren nach Anspruch 2, wobei, wenn der Konfidenzgrad ein erster Grad ist, die aktualisierte Trajektorie ein Anhalten des Fahrzeugs vor einem Bahngleis umfasst; oder wobei, wenn der Konfidenzgrad ein zweiter Grad ist, die aktualisierte Trajektorie die gleiche wie eine unmittelbar vorhergehende Trajektorie ist; oder wobei, wenn der Konfidenzgrad zwischen einem ersten und einem zweiten Grad ist, die aktualisierte Trajektorie ein Verlangsamen des Fahrzeugs umfasst.

9. System zum Steuern eines autonomen Fahrzeugs, das System umfassend:
einen oder mehrere Prozessoren, wobei der eine oder die mehreren Prozessoren zu Folgendem konfiguriert sind:
Empfangen von Bildern einer Eisenbahnleuchte (100, 426) über einen Zeitraum, während Fahrzeug sich der Eisenbahnleuchte nähern, wobei die Eisenbahnleuchte ein Paar Leuchten (110A, 110B, 510A, 510B) umfasst;
kontinuierliches oder periodisches Klassifizieren anhand der empfangenen Bilder der Eisenbahnleuchte, einer Farbe von Bilddaten, die Bereiche um und einschließlich des Paars Leuchten darstellen;
Bestimmen, basierend auf den Bildern der Eisenbahnleuchte, einer Farbintensität von Abschnitten der Bilddaten, die das Paar Leuchten darstellen, wobei die Abschnitte der Bilddaten als rot klassifiziert sind;
Klassifizieren, basierend auf der bestimmten Farbintensität der Abschnitte von Bilddaten, der Leuchten des Paars Leuchten als beleuchtet oder nicht über den Zeitraum;
Überwachen eines Beleuchtungsmusters zwischen jeder Leuchte des Paars Leuchten über den Zeitraum;
Anpassen basierend auf dem bestimmten Beleuchtungsmuster zwischen jeder Leuchte des Paars Leuchten, eines Konfidenzgrads, der indikativ für eine Wahrscheinlichkeit ist, dass die Eisenbahnleuchte aktiv ist, wobei der Konfidenzgrad für jede Erfassung eines bestimmten Beleuchtungsmusters zwischen jeder Leuchte des Paars Leuchten erhöht wird; und
Steuern des autonomen Fahrzeugs, während es sich der Eisenbahnleuchte nähert, basierend auf dem Konfidenzgrad.

10. System nach Anspruch 9, wobei der eine oder die mehreren Prozessoren ferner zu Folgendem konfiguriert sind:
Aktualisieren, basierend auf dem Konfidenzgrad, einer Trajektorie des autonomen Fahrzeugs; und Steuern des Fahrzeugs, während es sich der Eisenbahnleuchte nähert, basierend auf der aktualisierten Trajektorie.

11. System nach Anspruch 9, wobei vor einem Klassifizieren der Farbe der Bilddaten, die Bereiche um und einschließlich des Paars Leuchten darstellen, der eine oder die mehreren Prozessoren konfiguriert sind, um einen Verkehr zu steuern der entlang einer Trajektorie des autonomen Fahrzeugs über ein Bahngleis fährt.

12. System nach Anspruch 9, wobei der eine oder die mehreren Prozessoren ferner zu Folgendem konfiguriert sind:
Bestimmen eines Abstands des Fahrzeugs von der Eisenbahnleuchte; und
Bestimmen, dass der Abstand geringer ist als ein vordefinierter Schwellenwertabstand; und
als Reaktion auf ein Bestimmen, dass der Abstand geringer ist als ein vordefinierter Schwellenwertabstand, Klassifizieren der Farbe der Bilddaten, die Bereiche um und einschließlich des Paars Leuchten darstellen.

13. System nach Anspruch 9, wobei der eine oder die mehreren Prozessoren konfiguriert sind, um basierend auf der bestimmten Farbintensität der Abschnitte von Bilddaten die Leuchten des Paars Leuchten als beleuchtet oder nicht über den Zeitraum zu klassifizieren, durch:
Bestimmen, ob die Farbintensität der Abschnitte von Bilddaten einen Schwellenwert erfüllt, der angibt, dass mindestens eine Leuchte des Paars Leuchten jeweils beleuchtet oder nicht beleuchtet ist.

14. System nach Anspruch 13, wobei der eine oder die mehreren Prozessoren konfiguriert sind, um zu klassifizieren, ob die Leuchten des Paars Leuchten beleuchtet sind oder, unter Verwendung eines faltenden neuronalen Netzes.

15. System nach Anspruch 9, wobei das Beleuchtungsmuster zwischen jeder Leuchte des Paars Leuchten eine Rate angibt, mit der das Paar Leuchten in einem alternierenden Muster zwischen den Leuchten blinkt.

## Revendications

1. Procédé de commande d'un véhicule autonome, le procédé comprenant :
la réception, par un ou plusieurs processeurs, d'images d'une lumière de voie ferrée (100, 426) sur une période de temps lorsque le véhicule s'approche de la lumière de voie ferrée, dans lequel la lumière de voie ferrée comprend une paire de lumières (110A, 110B, 510A, 510B) ;
la classification continue ou périodique, par les un ou plusieurs processeurs, à partir des images reçues de la lumière de voie ferrée, d'une couleur de données d'image représentant des zones autour de la paire de lumières et incluant celle-ci ;
la détermination, sur la base des images de la lumière de voie ferrée, par les un ou plusieurs processeurs, d'une intensité de couleur de portions des données d'image représentant la paire de lumières, dans lequel les portions des données d'image sont classées comme rouges ;
la classification, sur la base de l'intensité de couleur déterminée des portions de données d'image, par les un ou plusieurs processeurs, des lumières de la paire de lumières comme étant éclairées ou non sur la période de temps ;
la surveillance, par les un ou plusieurs processeurs, d'un motif d'éclairage entre chaque lumière de la paire de lumières sur la période de temps ;
l'ajustement, par les un ou plusieurs processeurs et sur la base du motif d'éclairage déterminé entre chaque lumière de la paire de lumières, d'un niveau de confiance indicatif d'une probabilité que la lumière de voie ferrée soit active, dans lequel le niveau de confiance est augmenté pour chaque détection d'un motif d'éclairage particulier entre chaque lumière de la paire de lumières ; et
la commande du véhicule autonome à mesure qu'il s'approche de la lumière de voie ferrée sur la base du niveau de confiance.

2. Procédé selon la revendication 1, comprenant en outre :
la mise à jour, sur la base du niveau de confiance, par un ou plusieurs processeurs, d'une trajectoire du véhicule autonome ; et
la commande du véhicule à mesure qu'il s'approche de la lumière de voie ferrée sur la base de la trajectoire mise à jour.

3. Procédé selon la revendication 1, comprenant, avant la classification de la couleur des données d'image représentant des zones autour de la paire de lumières et incluant celle-ci, la détermination de la lumière de voie ferrée est configurée pour commander la circulation se déplaçant le long d'une trajectoire du véhicule autonome sur toute une ligne de voie ferrée.

4. Procédé selon la revendication 1, comprenant en outre :
la détermination d'une distance du véhicule à partir de la lumière de voie ferrée ; et
la détermination que la distance est inférieure à une distance seuil prédéfinie ; et
en réponse à la détermination que la distance est inférieure à une distance seuil prédéfinie, la classification de la couleur des données d'image représentant des zones autour de la paire de lumières et incluant celle-ci.

5. Procédé selon la revendication 1, dans lequel la classification, sur la base de l'intensité de couleur déterminée des portions de données d'image, des lumières de la paire de lumières comme étant éclairées ou non sur la période de temps comporte :
la détermination que l'intensité de couleur des portions de données d'image satisfait ou ne satisfait pas à une valeur de seuil indiquant qu'au moins une lumière de la paire de lumières est éclairée ou non éclairée, respectivement.

6. Procédé selon la revendication 5, dans lequel la détermination de l'intensité de couleur des portions de données d'image inclut l'utilisation d'un filtre de corrélation basé sur une fenêtre glissante.

7. Procédé selon la revendication 1,
dans lequel le motif d'éclairage entre chaque lumière de la paire de lumières indique une vitesse à laquelle la paire de lumières clignote selon un motif alterné entre les lumières.

8. Procédé selon la revendication 2, dans lequel lorsque le niveau de confiance est un premier niveau, la trajectoire mise à jour inclut l'arrêt du véhicule avant une ligne de voie ferrée ; ou dans lequel lorsque le niveau de confiance est un deuxième niveau, la trajectoire mise à jour est la même qu'une trajectoire immédiatement précédente ; ou dans lequel lorsque le niveau de confiance est entre un premier et un deuxième niveau, la trajectoire mise à jour inclut le ralentissement du véhicule.

9. Système de commande d'un véhicule autonome, le système comprenant :
un ou plusieurs processeurs, dans lequel les un ou plusieurs processeurs sont configurés pour :
recevoir des images d'une lumière de voie ferrée (100, 426) sur une période de temps pendant laquelle le véhicule s'approche de la lumière de voie ferrée, dans lequel la lumière de voie ferrée comprend une paire de lumières (110A, 110B, 510A, 510B) ;
classer en continu ou périodiquement, à partir des images reçues de la lumière de voie ferrée, une couleur de données d'image représentant des zones autour de la paire de lumières et incluant celle-ci ;
déterminer, sur la base des images de la lumière de voie ferrée, une intensité de couleur de portions des données d'image représentant la paire de lumières, dans lequel les portions des données d'image sont classées comme rouges ;
classer, sur la base de l'intensité de couleur déterminée des portions de données d'image, les lumières de la paire de lumières comme étant éclairées ou non sur la période de temps ;
surveiller un motif d'éclairage entre chaque lumière de la paire de lumières sur la période de temps ;
ajuster, sur la base du motif d'éclairage déterminé entre chaque lumière de la paire de lumières, un niveau de confiance indicatif d'une probabilité que la lumière de voie ferrée soit active, dans lequel le niveau de confiance est augmenté pour chaque détection d'un motif d'éclairage particulier entre chaque lumière de la paire de lumières ; et
commander le véhicule autonome à mesure qu'il s'approche de la lumière de voie ferrée sur la base du niveau de confiance.

10. Système selon la revendication 9, dans lequel les un ou plusieurs processeurs sont en outre configurés pour :
mettre à jour, sur la base du niveau de confiance, une trajectoire du véhicule autonome ; et commander le véhicule à mesure qu'il s'approche de la lumière de voie ferrée sur la base de la trajectoire mise à jour.

11. Système selon la revendication 9, dans lequel, avant la classification de la couleur des données d'image représentant des zones autour de la paire de lumières et incluant celle-ci, les un ou plusieurs processeurs sont configurés pour déterminer que la lumière de voie ferrée est configurée pour commander la circulation se déplaçant le long d'une trajectoire du véhicule autonome sur toute une ligne de voie ferrée.

12. Système selon la revendication 9, dans lequel les un ou plusieurs processeurs sont en outre configurés pour :
déterminer une distance du véhicule par rapport à la lumière de voie ferrée ; et
déterminer que la distance est inférieure à une distance seuil prédéfinie ; et
en réponse à la détermination que la distance est inférieure à une distance seuil prédéfinie, classer la couleur des données d'image représentant des zones autour de la paire de lumières et incluant celle-ci.

13. Système selon la revendication 9, dans lequel les un ou plusieurs processeurs sont configurés pour classer, sur la base de l'intensité de couleur déterminée des portions de données d'image, les lumières de la paire de lumières comme étant éclairées ou non sur la période de temps par :
la détermination que l'intensité de couleur des portions de données d'image satisfait ou ne satisfait pas à une valeur de seuil indiquant qu'au moins une lumière de la paire de lumières est éclairée ou non éclairée, respectivement.

14. Système selon la revendication 13, dans lequel les un ou plusieurs processeurs sont configurés pour classer si les lumières de la paire de lumières sont éclairées ou non en utilisant un réseau neuronal convolutif.

15. Système selon la revendication 9, dans lequel le motif d'éclairage entre chaque lumière de la paire de lumières indique une vitesse à laquelle la paire de lumières clignote selon un motif alterné entre les lumières.
